# EUROPÄISCHE PATENTSCHRIFT

(11) **EP 2 225 128 B1**
(45) Veröffentlichungstag und Bekanntmachung des Hinweises auf die Patenterteilung: **25.12.2013**
(21) Anmeldenummer: 08864355.6
(22) Anmeldetag: 27.10.2008
(51) Int. Cl.: B60S 1/04

(54) **WISCHANLAGE FÜR EIN KRAFTFAHRZEUG**
WIPER SYSTEM FOR A MOTOR VEHICLE
SYSTÈME D'ESSUIE-GLACE POUR VÉHICULE AUTOMOBILE

(30) Priorität: 20.12.2007 DE 102007061721
(43) Veröffentlichungstag der Anmeldung: 08.09.2010
(73) Patentinhaber: Robert Bosch GmbH, 70442 Stuttgart (DE)
(72) Erfinder: PINO JOAQUIN, Jose Carlos, E-43720 Arbos del Penedes (ES); SURKAMP, Gundolf, E-08720 Vilafranca del Penedes (ES)
(86) Internationale Anmeldenummer: PCT/EP2008/064497
(87) Internationale Veröffentlichungsnummer: WO 2009/080393

(56) Entgegenhaltungen:
- EP-A- 0 430 375
- EP-A- 1 055 571
- DE-A1-102006 058 740
- GB-A- 2 258 146

## Beschreibung

### Stand der Technik

Die Erfindung betrifft eine Wischanlage für ein Kraftfahrzeug gemäß dem Oberbegriff des Anspruchs 1.

Bekannte Wischanlagen, insbesondere Frontwischanlagen, weisen ein Befestigungsrohr auf, an dem ein Wischerantrieb, umfassend einen elektrischen Antriebsmotor und ein von diesem angetriebenes Getriebe, mit Hilfe von Befestigungsschrauben festgelegt ist. Da das Festlegen des Wischerantriebs an einem kreisförmig konturierten Befestigungsrohr mit Hilfe von Befestigungsschrauben nur aufwändig zu realisieren ist, ist das Befestigungsrohr von bekannten Wischanlagen in einen Befestigungsbereich derart verpresst, dass es eine U-förmige Querschnittskontur aufweist. Bei derartigen Befestigungsrohren liegen sämtliche einander gegenüberliegenden Rohrwandabschnitte im Bereich der U-förmigen Querschnittskontur unmittelbar aneinander an. Nachteilig bei den bekannten Wischanlagen ist die vergleichsweise geringe Torsionssteifigkeit des Befestigungsrohres im Befestigungsbereich.

Das Dokument EP 0 430 375 B1 schlägt zur Verbesserung der Steifigkeit vor, den rohrförmigen Träger im Befestigungsbereich mit einem trapezförmigen Querschnitt auszubilden, welcher einen oberen Wandabschnitt sowie einen im Wesentlichen parallel dazu verlaufenden unteren Wandabschnitt aufweist, und sich nach innen verjüngende Seitenwände. Durch die nach innen verlaufende Verjüngung neigt der Befestigungsabschnitt bei Biege- und Torsionsbeanspruchung jedoch zu einem Einknicken, was die Steifigkeit des Befestigungsprofils stark einschränkt.

Um diesen Nachteil zu verhindern, schlägt das Dokument DE 10 2006 058 740 A1 vor, den rohrförmigen Träger im Befestigungsbereich so auszubilden, dass er eine im Wesentlichen H-förmige Querschnittsfläche aufweist. Auf diese Weise ergibt sich eine stabilere und torsionssteifere Scheibenwischvorrichtung, die darüber hinaus wesentlich kostengünstiger sowie einfacher zu fertigen ist. Die Biege- und Torsionssteifigkeit wird durch die entsprechende H-förmige Ausbildung zwar verbessert, jedoch bilden die Seitenschenkel dieser Ausführungsform eine Schwachstelle bezüglich auftretender Torsionskräfte.

Eine gattungsgemäße Wischanlage ist im Dokument EP-A-1055571 offenbart.

### Offenbarung der Erfindung

### Technische Aufgabe

Der Erfindung liegt die Aufgabe zugrunde, eine Wischanlage vorzuschlagen, deren Befestigungsrohr zum Einen eine einfache Befestigungsmöglichkeit für die Antriebseinheit bereit-stellt und zum anderen eine erhöhte Torsionssteifigkeit aufweist.

### Technische Lösung

Diese Aufgabe wird mit einer Wischanlage mit den Merkmalen des Anspruchs 1 gelöst. Vorteilhafte Weiterbildungen der Erfindung sind in den Unteransprüchen angegeben.

Der Erfindung liegt der Gedanke zugrunde, das Befestigungsrohr im Befestigungsbereich querschnittlich derart zu konturieren, dass sich die winklig zu dem Anlageschenkel zur Anlage des Wischerantriebs (Wischermotor und/oder Getriebe, insbesondere Schneckengetriebe) erstreckenden Seitenschenkel nicht, wie im Stand der Technik, nur in eine gemeinsame Richtung erstrecken, sondern dass sich beide Seitenschenkel ausgehend von dem Anlageschenkel jeweils in, zumindest näherungsweise, einander entgegengesetzte Richtungen erstrecken. Anders ausgedrückt wird zum Erhöhen der Torsionssteifigkeit vorgeschlagen, dass die zwei freien Enden jedes Seitenschenkels auf zwei Seiten einer gedachten, den Anlageschenkel aufnehmenden Ebene angeordnet sind, insbesondere derart, dass ein querschnittlich, zumindest näherungsweise, H-förmiger Befestigungsbereich resultiert. Noch anders ausgedrückt ist das Befestigungsrohr in seinem Befestigungsbereich bei einer nach dem Konzept der Erfindung ausgebildeten Wischanlage querschnittlich betrachtet, zumindest näherungsweise, doppel-T-förmig konturiert, sodass sich im Wesentlichen zwei ineinander entgegengesetzte Richtungen geöffnete Nuten ergeben, wobei der gemeinsame Nutgrund von dem Anlageschenkel und die Nutseitenwände von den beiden Seitenschenkeln gebildet werden. Der Anlageschenkel stellt dabei zwei, zumindest näherungsweise, parallel zueinander verlaufende und jeweils an einem Nutgrund befindliche, vorzugsweise ebene, Anlageflächen, zum einen für den Wischerantrieb und zum anderen für die Schraubenköpfe von Befestigungsschrauben zum Festlegen des Wischerantriebs am Befestigungsrohr, bereit. Aufgrund der sich, ausgehend von dem Anlageschenkel in zwei einander entgegengesetzte Richtungen erstreckenden Seitenschenkeln weist das Befestigungsrohr einer nach dem Konzept der Erfindung ausgebildeten Wischanlage in seinem Befestigungsbereich eine erhöhte Torsionssteifigkeit auf, sodass mit Vorteil bei Bedarf Befestigungsrohre mit im Vergleich zum Stand der Technik geringeren Rohrwandstärken eingesetzt werden können.

In Weiterbildung der Erfindung ist mit Vorteil vorgesehen, dass die Querschnittskontur des mindestens einen Längsabschnitts des Befestigungsbereiches symmetrisch ausgebildet ist und zwar spiegelsymmetrisch zu einer Symmetrieebene, die sich in Längsrichtung des Befestigungsbereiches erstreckt und, zumindest näherungsweise, rechtwinklig zum Anlageschenkel angeordnet ist. Bevorzugt ist die Querschnittskontur zusätzlich oder alternativ spiegelsymmetrisch zu einer den Anlageschenkel aufnehmenden Ebene ausgebildet.

Von besonderem Vorteil ist eine Ausführungsform der Wischanlage, bei der der Befestigungsbereich durch Prägen eines Hohlrohres gebildet ist, wobei das Hohlrohr in seinem Befestigungsbereich vor dem Prägen bevorzugt als Rundrohr ausgebildet war. Bevorzugt erfolgt das Prägen des Befestigungsbereiches dabei nach dem Ablängen des Befestigungsrohres und nach einem ggf. vorgesehenen Biegeschritt zum Anpassen des Befestigungsrohres an die jeweilige Einbausituation.

Um die Steifigkeit des Befestigungsrohres in seinem Befestigungsbereich weiter zu erhöhen, ist erfindungsgemäß vorgesehen, dass bei zumindest einem Seitenschenkel die Rohrwandabschnitte des Befestigungsrohres nicht, wie im Stand der Technik, unmittelbar aneinander anliegen, sondern derart geformt sind, dass sie, zumindest in einem Abschnitt, eine Hohlkammer umschließen, die sich in Längsrichtung des Befestigungsbereiches erstreckt. Bevorzugt ist in beiden Seitenschenkeln eine derartige Hohlkammer zum Erhöhen der Steifigkeit des Befestigungsrohres vorgesehen.

Besonders gute Steifigkeitswerte können erfindungsgemäß bei einem Befestigungsrohr erhalten werden, bei dem die mindestens eine Hohlkammer im Querschnitt, zumindest näherungsweise, dreieckig konturiert ist, wobei die Seitenwände des von Rohrwandabschnitten gebildeten Dreiecks nicht zwingend eben ausgebildet sein müssen. Besonders bevorzugt ist im Hinblick auf eine erhöhte Steifigkeit eine Ausführungsform, bei der ein äußerer, vorzugsweise die laterale Seitenwand der dreieckigen Hohlkammer bildende, Rohrwandabschnitt einen gekrümmten, bevorzugt konvex gekrümmten, Verlauf aufweist. Dabei verbindet dieser Rohrwandabschnitt bevorzugt die freien Enden des Seitenschenkels miteinander.

Von besonderem Vorteil im Hinblick auf eine weitere Erhöhung der Torsionssteifigkeit des Befestigungsrohres ist eine Ausführungsform, bei der zwei in Längsrichtung des Befestigungsrohres voneinander beabstandete Befestigungsbereiche vorgesehen sind, deren Querschnittskontur jeweils wie zuvor beschrieben ausgebildet ist. In dem Axialabschnitt des Befestigungsrohres zwischen den Befestigungsbereichen weist das Befestigungsrohr, zumindest abschnittsweise, bevorzugt ein rundes Querschnittsprofil auf. Zum Festlegen des Wischerantriebs ist in jedem der beiden in Längsrichtung beabstandeten Befestigungsbereiche mindestens ein, vorzugsweise ausschließlich ein, Durchgangsloch vorgesehen, das jeweils die beiden, auf einander entgegengesetzten Außenseiten des jeweiligen Anlageschenkels angeordneten Anlageflächen für den jeweiligen Befestigungsschraubenkopf bzw. den Wischerantrieb miteinander verbindet.

Alternativ zu dem Vorsehen von zwei in Längsrichtung voneinander beabstandeten Befestigungsbereichen mit jeweils einem, zumindest näherungsweise, H-förmig konturierten Querschnitt, ist gemäß einer alternativen Ausführungsform vorgesehen, dass ausschließlich ein einziger durchgehender Befestigungsbereich mit einer zuvor beschriebenen Querschnittskontur vorgesehen ist, wobei dieser Befestigungsbereich mindestens zwei, vorzugsweise ausschließlich zwei, in Längsrichtung des Befestigungsbereiches voneinander beabstandete Durchgangslöcher zur jeweiligen Aufnahme einer Befestigungsschraube zum Festlegen des Wischerantriebs aufweist.

Um Fertigungstoleranzen in Richtung der Längserstreckung des Befestigungsrohres ausgleichen zu können, ist eine Ausführungsform bevorzugt, bei der eines der, bevorzugt zwei, Befestigungsrohre als Langloch und ein anderes Befestigungsrohr als Rundloch ausgebildet sind. Bei dem Langloch erstreckt sich der größere Durchmesser dabei mit Vorteil entlang der Längserstreckung des Befestigungsrohres.

Um ein spielfreies Festlegen des Wischerantriebs am Befestigungsrohr mit Hilfe von zwei Befestigungsschrauben zu ermöglichen, ist eine Ausführungsform besonders bevorzugt, bei der zumindest eine der Befestigungsschrauben, vorzugsweise beide Befestigungsschrauben, als Passschraube ausgebildet ist/sind, um das zum Fügen der Befestigungsschrauben notwendige Spiel zu eliminieren.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine schematische Darstellung einer Wischanlage,
- Fig. 2: eine mögliche Ausgestaltung eines Befestigungsbereiches des in Fig. 1 gezeigten Befestigungsrohres mit einem sich über die gesamte Längserstreckung des Befestigungsbereiches erstreckenden Anlageschenkel,
- Fig. 3: eine alternative Ausgestaltungsmöglichkeit des Befestigungsrohres gemäß Fig. 1 mit zwei in Längsrichtung des Befestigungsrohres voneinander beabstandeten Befestigungsbereichen, die jeweils querschnittlich, zumindest näherungsweise, H-förmig konturiert sind,
- Fig. 4: eine vergrößerte Schnittansicht des Befestigungsrohres entlang der Schnittlinie A-A gemäß Fig. 2 sowie entlang der Schnittlinie A-A gemäß Fig. 3 und
- Fig. 5: den Befestigungsbereich in der Schnittansicht gemäß Fig. 4 mit daran festgelegtem Wischerantrieb.

### Ausführungsformen der Erfindung

In den Figuren sind gleiche Bauteile und Bauteile mit der gleichen Funktion mit den gleichen Bezugszeichen gekennzeichnet.

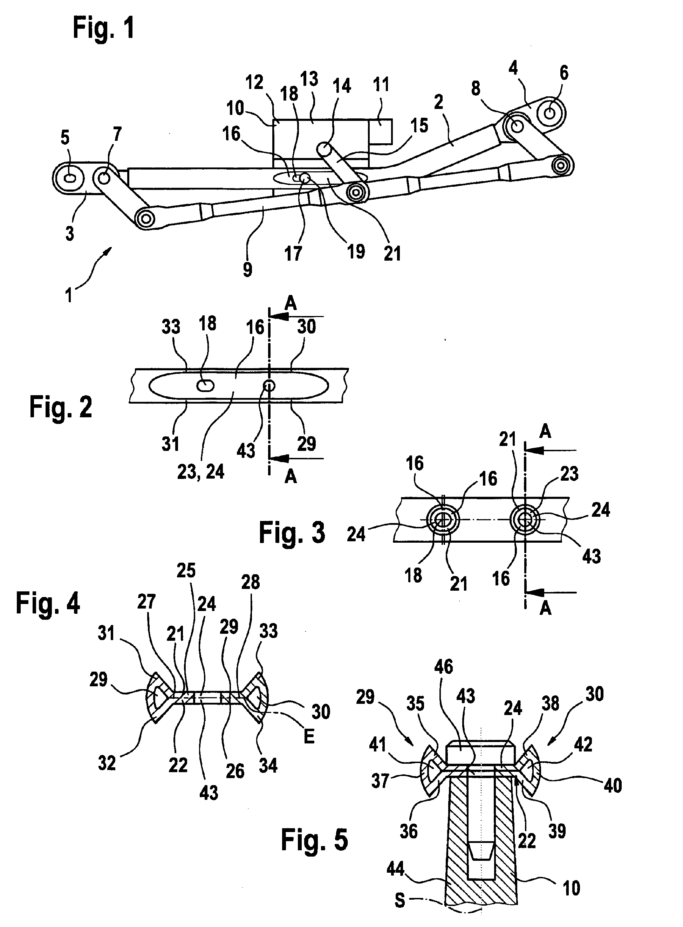

In Fig. 1 ist eine als Frontwischanlage ausgebildete Wischanlage 1 für ein Kraftfahrzeug dargestellt. Die Wischanlage 1 umfasst ein gebogenes, als Rundrohr ausgebildetes Befestigungsrohr 2, das an beiden Enden mit jeweils einem Halteelement 3, 4 zum Fixieren der Wischanlage 1 an einer Fahrzeugkarosserie verbunden ist. Jedes Halteelement 3, 4 weist eine Fixieröffnung 5, 6 zur Aufnahme jeweils einer nicht gezeigten Fixierschraube auf.

Ferner ist in jedem Halteelement 3, 4 eine Wischerwelle 7, 8 verdrehbar gelagert. An den Enden der Wischerwelle 7, 8 ist jeweils ein Wischerarm mit einem Wischgummi (nicht gezeigt) montierbar.

Die Wischerwellen 7, 8 sind über ein Kurbelgestänge 9 mit einem Wischerantrieb 10 verbunden. Dieser umfasst einen nicht gezeigten, in einem Motor 11 angeordneten Elektromotor, der im drehmomentübertragenden Eingriff mit einem nicht gezeigten, in einem Getriebegehäuse 12 angeordneten Getriebe steht. Das Getriebegehäuse 12 bildet zusammen mit dem an diesem angeflanschten Motorgehäuse 11 ein gemeinsames Wischerantriebsgehäuse 13. Aus diesem ragt eine Abtriebswelle 14 heraus, die über eine Kurbelplatte 15 mit dem Kurbelgestänge 9 verbunden ist.

Der Wischerantrieb 10 ist an einem Befestigungsbereich 16 des Befestigungsrohres 2 mit Hilfe zweier Befestigungsschrauben festgelegt, von denen in Fig. 1 nur eine, als Passschraube ausgebildete Befestigungsschraube 17 zu erkennen ist. Die andere Befestigungsschraube ist von der Kurbelplatte 15 verdeckt. Die gezeigte Befestigungsschraube 17 durchsetzt ein als Langloch ausgebildetes Durchgangsloch 18 im Befestigungsbereich 16. Der Schraubenkopf 19 der Befestigungsschraube 17 liegt dabei mit einer unteren, aus Fig. 1 nicht zu erkennenden Ringfläche auf einer ersten, ebenen Anlagefläche 21 des Befestigungsbereiches 16 auf. Parallel zu der ersten Anlagefläche 21 verläuft eine zweite Anlagefläche 22, die zur Anlage des Wischerantriebs 10 dient und in Fig. 4 gezeigt ist.

Im Folgenden werden mögliche Ausgestaltungsformen des Befestigungsbereiches 16 anhand der Fig. 2 bis 5 im Detail erläutert.

Bei dem in Fig. 2 gezeigten Ausführungsbeispiel weist der Befestigungsbereich 16 einen einzigen, in Längsrichtung durchgehenden Befestigungsbereich 16 auf. Dieser einzige Befestigungsbereich 16 ist entlang der Schnittlinie A-A geschnitten in Fig. 4 gezeigt. Zu erkennen ist ein mittlerer Anlageschenkel 24, der die beiden Anlageflächen 21, 22 bereitstellt. Der Anlageschenkel 24 ist gebildet von zwei zueinander parallel verlaufenden Rohrwandabschnitten 25, 26, die unmittelbar aneinander anliegen. Das in Fig. 4 gezeigte Querschnittsprofil ist durch Prägen des ursprünglich durchgehend als Rundrohr ausgebildeten Befestigungsrohres 2 gebildet.

An beiden seitlichen Enden 27, 28 geht der Anlageschenkel 24 über in jeweils einen Seitenschenkel 29, 30, wobei die jeweiligen freien Enden 31, 32 und 33, 34 auf zwei einander gegenüberliegenden Seiten einer gedachten, den Anlagesteg 24 aufnehmenden Ebene E angeordnet sind.

Jeder Seitenschenkel 29, 30 erstreckt sich also in zwei einander entgegengesetzte Richtungen, ausgehend von den Enden 27, 28 des Anlagestegs 24. In dem gezeigten Ausführungsbeispiel ist jeder Seitenschenkel 29, 30 gebildet aus jeweils drei Rohrwandabschnitten 35, 36, 37 und 38, 39, 40 (vgl. Fig. 5). Die drei Rohrwandabschnitte 35, 36, 37 und 38, 39, 40 jedes Seitenschenkels 29, 30 umschließen jeweils eine querschnittlich im Wesentlichen dreieckig konturierte Hohlkammer 41, 42 zur Erhöhung der Torsionssteifigkeit des Befestigungsrohres 2 in seinem Befestigungsbereich 16.

Die beiden, von dem Anlageschenkel 24 ausgehenden Rohrwandabschnitte 35, 36 und 38, 39 der Seitenschenkel 29, 30 verlaufen im Wesentlichen rechteckig zueinander und stoßen im Bereich der freien Enden 31, 32 bzw. 33, 34 auf den jeweils äußeren Rohrwandabschnitt 37, 40, der konvex nach außen gekrümmt ist.

Das in Fig. 2 rechte und in den Fig. 4 und 5 gezeigte Durchgangsloch 43 ist als Rundloch ausgebildet, wohingegen das in Längsrichtung davon beabstandete Durchgangsloch 18 als Langloch ausgebildet ist, um somit Fertigungstoleranzen in Längsrichtung ausgleichen zu können.

Wie sich insbesondere aus Fig. 5 ergibt, ist das Querschnittsprofil des Befestigungsbereiches 16 symmetrisch zur Ebene E sowie zu einer Symmetrieebene S ausgebildet, die sich senkrecht zur gedachten Ebene E sowie in Längsrichtung des Befestigungsbereiches 16 erstreckt.

Aus Fig. 5 ist zu erkennen, dass sich der Wischerantrieb 10 mit Hilfe von mit jeweils einem Innengewinde versehenen Schraubdomen, von denen in Fig. 5 nur ein Schraubdom 44 zu erkennen ist, an der zweiten, d.h. unteren Anlagefläche 22 des Anlagestegs 24 stirnseitig abstützt, wobei die die Durchgangslöcher 18, 43 durchsetzenden Befestigungsschrauben 17, 45 sich mit ihrem jeweiligen Schraubenkopf 19, 46 auf der gegenüberliegenden erste Anlagefläche 21 abstützen. Der Durchmesser der Schraubenköpfe 19, 46 entspricht dabei im Wesentlichen der Längserstreckung des Anlageschenkel 24 quer zur Längserstreckung des Befestigungsbereiches 16.

In Fig. 3 ist eine alternative Ausgestaltungsmöglichkeit des Befestigungsrohres 2 gezeigt. Dieses umfasst neben dem ersten Befestigungsbereich 16 einen davon in Längsrichtung beabstandeten zweiten Befestigungsbereich 23, wobei beide Befestigungsbereiche 16, 23, wie in den Fig. 4 und 5 gezeigt, im Querschnitt H-förmig konturiert sind. Die Befestigungsbereiche 16, 23, die auch unterschiedlich ausgebildet sein können, unterscheiden sich in dem gezeigten Ausführungsbeispiel im Wesentlichen dadurch, dass das in der Zeichnungsebene links befindliche Durchgangsloch 18 als Langloch und das andere, in der Zeichnungsebene rechts befindliche Durchgangsloch 43 als Rundloch ausgebildet ist. In einem Bereich in Längsrichtung zwischen den beiden Befestigungsbereichen 16, 23 ist das Befestigungsrohr 2, wie ursprünglich vor dem Prägen auch in den Befestigungsbereichen 16, 23 querschnittlich rund konturiert.

Aus der Ansicht gemäß Fig. 3 ist nur jeweils die erste Anlagefläche 21 der Anlagestege 24 zu erkennen. Die Lage der gegenüberliegenden zweiten Anlagefläche 22 ergibt sich nur aus den Schnittansichten gemäß den Fig. 4 und 5.

## Patentansprüche

1. Wischanlage für ein Kraftfahrzeug mit einem Befestigungsrohr (2), das mindestens einen Befestigungsbereich (16, 23) zum Festlegen eines Wischerantriebes (10) aufweist, wobei die Querschnittskontur des Befestigungsbereichs (16) einen Anlageschenkel (24) aufweist, der von zwei zueinander parallel verlaufenden Rohrwandabschnitten (25, 26) gebildet ist, die unmittelbar aneinander anliegen, wobei an beiden Enden des Anlageschenkels (24) jeweils ein winklig zum Anlageschenkel (24) verlaufende Seitenschenkel (29, 30) anschließt, deren freie Enden auf zwei einander gegenüberliegenden Seiten einer gedachten, den Anlageschenkel (24) aufnehmenden Ebene (E) angeordnet sind, **dadurch gekennzeichnet, dass** zumindest einer der Seitenschenkel (29, 30) eine sich in Längsrichtung des Befestigungsbereichs (16, 23) erstreckende Hohlkammer (41, 42) einschließt, wobei die Hohlkammer (41, 42) zumindest näherungsweise dreieckig konturiert ist.

2. Wischanlage nach Anspruch 1, **dadurch gekennzeichnet, dass** der Anlageschenkel die Seitenschenkel (29, 30) symmetrisch zu einer sich in Längsrichtung des Befestigungsbereiches (16, 23) erstreckenden und senkrecht zu der gedachten Ebene (E) verlaufenden Symmetrieebene (S) ausgebildet sind.

3. Wischanlage nach einem der vorhergehenden Ansprüche, **dadurch gekennzeichnet, dass** der Befestigungsbereich (16, 23) durch Prägen eines vorzugsweise als Rundrohr ausgebildeten Hohlrohres gebildet ist.

4. Wischanlage nach einem der vorhergehenden Ansprüche, **dadurch gekennzeichnet, dass** ein äußerer Rohrwandabschnitt (37, 40) des mindestens einen Seitenschenkels (29, 30) einen gebogenen Verlauf aufweist.

5. Wischanlage nach einem der vorhergehenden Ansprüche, **dadurch gekennzeichnet, dass** in dem Befestigungsbereich (16, 23) zwei in Längsrichtung des Befestigungsrohres (2) voneinander beabstandete Durchgangslöcher (18, 43) zur Aufnahme jeweils einer insbesondere als Passschraube ausgebildeten Befestigungsschraube (17, 45) vorgesehen sind.

6. Wischanlage nach einem der Ansprüche 1-4, **dadurch gekennzeichnet, dass** zwei in Längsrichtung des Befestigungsrohres (2) voneinander beabstandete, vorzugsweise identisch konturierte Befestigungsbereiche (16, 23) vorgesehen sind, und dass in jedem der beiden Befestigungsbereiche (16, 23) mindestens ein Durchgangsloch (18, 43) zur Aufnahme jeweils einer insbesondere als Passschraube ausgebildeten Befestigungsschraube (17, 45) vorgesehen ist.

7. Wischanlage nach Anspruch 5 oder 6, **dadurch gekennzeichnet, dass** mindestens eines der Durchgangslöcher (18, 43) als Langloch und mindestens eines der Durchgangslöcher (18, 43) als Rundloch ausgebildet ist.

8. Wischanlage nach einem der Ansprüche 5, 6 oder 7, **dadurch gekennzeichnet, dass** der Wischerantrieb (10) vorzugsweise in zwei in Längsrichtung beabstandeten Schraubdomen (44) an dem mindestens einen Anlageschenkel anliegt und mit Hilfe von die Durchgangslöcher (18, 43) durchsetzenden Befestigungsschrauben (17, 45) am Befestigungsrohr (2) fixiert ist.

## Claims

1. Wiper system for a motor vehicle, with a fastening tube (2) which has at least one fastening region (16, 23) for securing a wiper drive (10), wherein the cross-sectional contour of the fastening region (16) has a bearing limb (24) which is formed by two tube wall sections (25, 26) which run parallel to each other and bear directly against each other, wherein the two ends of the bearing limb (24) are adjoined in each case by a side limb (29, 30) which runs at an angle to the bearing limb (24), and the free ends of said side limbs are arranged on two mutually opposite sides of an imaginary plane (E) accommodating the bearing limb (24), **characterized in that** at least one of the side limbs (29, 30) encloses a hollow chamber (41, 42) extending in the longitudinal direction of the fastening region (16, 23), wherein the hollow chamber (41, 42) has an at least approximately triangular contour.

2. Wiper system according to Claim 1, **characterized in that** the bearing limb and the side limbs (29, 30) are formed symmetrically with respect to a plane of symmetry (S) which extends in the longitudinal direction of the fastening region (16, 23) and runs perpendicularly to the imaginary plane (E).

3. Wiper system according to either of the preceding claims, **characterized in that** the fastening region (16, 23) is formed by stamping a hollow tube which is preferably in the form of a round tube.

4. Wiper system according to one of the preceding claims, **characterized in that** an outer tube wall section (37, 40) of the at least one side limb (29, 30) has a curved profile.

5. Wiper system according to one of the preceding claims, **characterized in that** two passage holes (18, 43) which are spaced apart from each other in the longitudinal direction of the fastening tube (2) and are intended for receiving in each case one fastening screw (17, 45), which is in particular in the form of a dowel screw, are provided in the fastening region (16, 23).

6. Wiper system according to one of Claims 1 to 5, **characterized in that** two preferably identically contoured fastening regions (16, 23) which are spaced apart from each other in the longitudinal direction of the fastening tube (2) are provided, and **in that** at least one passage hole (18, 43) for receiving in each case one fastening screw (17, 45) which is in particular in the form of a dowel screw, is provided in each of the two fastening regions (16, 23).

7. Wiper system according to Claim 5 or 6, **characterized in that** at least one of the passage holes (18, 43) is designed as an elongated hole and at least one of the passage holes (18, 43) is designed as a round hole.

8. Wiper system according to one of Claims 5, 6 or 7, **characterized in that** the wiper drive (10) bears against the at least one bearing limb preferably in two screw domes (44) which are spaced apart in the longitudinal direction and is fixed on the fastening tube (2) with the aid of fastening screws (17, 45) passing through the passage holes (18, 43).

## Revendications

1. Système d'essuie-glace pour un véhicule automobile, comprenant un tube de fixation (2) qui présente au moins une région de fixation (16, 23) pour la fixation d'un entraînement d'essuie-glace (10), le contour en section transversale de la région de fixation (16) présentant une branche d'appui (24) qui est formée par deux portions de paroi de tube (25, 26) s'étendant parallèlement l'une à l'autre, qui s'appliquent directement l'une contre l'autre, aux deux extrémités de la branche d'appui (24) se raccordant à chaque fois une branche latérale (29, 30) s'étendant de manière coudée par rapport à la branche d'appui (24), les extrémités libres des branches latérales étant disposées sur deux côtés opposés l'un à l'autre d'un plan (E) imaginaire comprenant la branche d'appui (24), **caractérisé en ce qu'**au moins l'une des branches latérales (29, 30) comprend une chambre creuse (41, 42) s'étendant dans la direction longitudinale de la région de fixation (16, 23), la chambre creuse (41, 42) ayant au moins approximativement un contour triangulaire.

2. Système d'essuie-glace selon la revendication 1, **caractérisé en ce que** la branche d'appui et les branches latérales (29, 30) sont réalisées symétriquement par rapport à un plan de symétrie (S) s'étendant dans la direction longitudinale de la région de fixation (16, 23) et perpendiculairement au plan imaginaire (E).

3. Système d'essuie-glace selon l'une quelconque des revendications précédentes, **caractérisé en ce que** la région de fixation (16, 23) est formée par matriçage d'un tube creux réalisé de préférence sous forme de tube rond.

4. Système d'essuie-glace selon l'une quelconque des revendications précédentes, **caractérisé en ce qu'**une portion de paroi tubulaire extérieure (37, 40) de l'au moins une branche latérale (29, 30) présente une allure courbe.

5. Système d'essuie-glace selon l'une quelconque des revendications précédentes, **caractérisé en ce que** dans la région de fixation (16, 23) sont prévus deux trous de passage (18, 43) espacés l'un de l'autre dans la direction longitudinale du tube de fixation (2) pour recevoir à chaque fois une vis de fixation (17, 45) réalisée notamment sous forme de vis d'ajustage.

6. Système d'essuie-glace selon l'une quelconque des revendications 1 à 4, **caractérisé en ce que** deux régions de fixation (16, 23) espacées l'une de l'autre dans la direction longitudinale du tube de fixation (2), de préférence de contours identiques, sont prévues, et **en ce que** dans chacune des deux régions de fixation (16, 23) est prévu au moins un trou de passage (18, 43) pour recevoir à chaque fois une vis de fixation (17, 45) réalisée notamment sous forme de vis d'ajustage.

7. Système d'essuie-glace selon la revendication 5 ou 6, **caractérisé en ce qu'**au moins l'un des trous de passage (18, 43) est réalisé sous forme de trou oblong et au moins l'un des trous de passage (18, 43) est réalisé sous forme de trou rond.

8. Système d'essuie-glace selon l'une quelconque des revendications 5, 6 ou 7, **caractérisé en ce que** l'entraînement d'essuie-glace (10) s'applique de préférence dans deux dômes de vis (44) espacés dans la direction longitudinale contre l'au moins une branche d'appui et est fixé à l'aide de vis de fixation (17, 45) traversant les trous de passage (18, 43) au tube de fixation (2).
